# EUROPEAN PATENT APPLICATION

(11) **EP 4 186 390 A1**
(43) Date of publication of application: **31.05.2023**
(21) Application number: 21865880.5
(22) Date of filing: 30.08.2021
(51) Int. Cl.: A45D 20/10, A45D 20/00, H05B 1/02, G05B 23/02

(54) **POWER CONTROL METHOD AND APPARATUS FOR BLOWER, AND TEMPERATURE CONTROL PARAMETER CALIBRATION METHOD AND APPARATUS FOR BLOWER**

(30) Priority: 09.09.2020 CN 202010939255; 09.09.2020 CN 202010938944
(71) Applicant: Dreame Innovation Technology (Suzhou) Co., Ltd., Suzhou, Jiangsu 215104 (CN)
(72) Inventor: ZHANG, Yadong, Suzhou Jiangsu 215104 (CN)
(74) Representative: dompatent von Kreisler Selting Werner - Partnerschaft von Patent- und Rechtsanwälten mbB
(86) International application number: PCT/CN2021/115256
(87) International publication number: WO 2022/052824

(57) **Abstract**

A power control method and apparatus for a blower, and a temperature control parameter calibration method and apparatus for a blower, belonging to the technical field of computers. The power control method for a blower comprises: determining a target range of an operating parameter of a heat generation element of a blower according to a target power range of the blower, wherein the operating parameter comprises a time feature parameter for the turning on of the heat generation element of the blower within a predetermined period; and controlling the operating parameter of the heat generation element to be kept within the target range, so that the power of the blower is kept within the target power range. In this way, the problem that different blowers that operate at the same gear have different actual operating powers due to the difference between the different blowers can be solved. The different blowers that operate at the same gear can be kept within the same power range without the need to adjust the difference between blowers of the same model, such that different blowers of the same model can operate according to an expected power. The temperature control parameter calibration method comprises: controlling the operation of a blower; during the operation process, measuring an air outlet temperature of the blower in real time; and when the air outlet temperature is a target temperature, determining a measured value of a temperature control parameter of the blower to be a calibrated value of the temperature control parameter. In this way, different blowers under the same temperature control parameter can maintain the same air outlet temperature, and different blowers of the same model can thus achieve a uniform air outlet effect.

## Description

### TECHNICAL FIELD

The present application relates to a power control method, a method for calibrating a temperature control parameter and a device for a hair dryer, which belongs to the technical field of computers.

### BACKGROUND

Hair dryers are mainly used for drying and shaping of hair. The hair dryer usually includes a heating wire and a blower. When energized, the heating wire will generate heat, and the blower will drive an airflow to flow through the heating wire and output hot air from an air outlet.

Generally, a power of the hair dryer and a temperature of the heating wire corresponding to each gear in the hair dryer are uniformly calibrated. However, due to the differences among different hair dryers, it will lead to a problem that the actual working power of different hair dryers working in the same gear is different, and a problem that the temperature of the same heating wire and the outlet air temperature corresponding to different hair dryers are different.

### SUMMARY

The present application provides a power control method, a device and a storage medium for a hair dryer, which can solve the problems that due to the differences among different hair dryers, the actual working powers of the different hair dryers working in the same gear are different; and for the temperature of the same heating wire, the outlet air temperatures corresponding to the different hair dryers are different. The present application provides the following technical solutions:

A first aspect provides a power control method for a hair dryer. The method includes:
determining a target range of a working parameter of a heating element of the hair dryer according to a target power range of the hair dryer; the working parameter including a time characteristic parameter during which the heating element of the hair dryer is turned on in a predetermined period; and
controlling the working parameter of the heating element to be kept within the target range, so that a power of the hair dryer is kept within the target power range.

Optionally, determining the target range of the working parameter of the heating element of the hair dryer according to the target power range of the hair dryer, includes:
acquiring a first correspondence relationship between a pre-established working parameter and the power of the hair dryer; and
obtaining the target range of the working parameter by calculation according to the target power range and the first correspondence relationship.

Optionally, the working parameter includes the number of half waves during which the heating element of the hair dryer is turned on in the predetermined period; wherein the predetermined period includes a plurality of the half waves; and correspondingly, controlling the working parameter of the heating element to be kept within the target range, includes:
by controlling on or off of the heating element, keeping the number of half waves during which the heating element is turned on within the target range in the predetermined period; wherein one or more spaced half waves exist between part or all of adjacent halves where the heating element is turned on.

Optionally, determining the target range of the working parameter of the heating element corresponding to the target power range, includes:
acquiring a first correspondence relationship between a pre-established working parameter and the power of the hair dryer;
acquiring a second correspondence relationship between the pre-established working parameter and an outlet air temperature of the hair dryer; and
obtaining the target range of the working parameter of the heating element by calculation, according to the target power range of the hair dryer, a target temperature range of the outlet air temperature, the first correspondence relationship, and the second correspondence relationship.

Optionally, the first correspondence relationship includes establishing in following manners:
controlling an operation of the hair dryer;
adjusting the working parameter during the operation;
recording a numerical value of the working parameter during an adjustment process, and detecting a power value corresponding to the numerical value of the working parameter; and
obtaining the first correspondence relationship by calculation according to the numerical value of the working parameter and the power value.

Optionally, the second correspondence relationship includes establishing in following manners:
controlling an operation of the hair dryer;
adjusting the working parameter during the operation;
recording a numerical value of the working parameter during an adjustment process, and detecting a temperature value of the outlet air temperature corresponding to the numerical value of the working parameter; and
obtaining the second correspondence relationship by calculation according to the working parameter and the temperature value.

Optionally, obtaining the target range of the working parameter of the heating element by calculation, according to the target power range of the hair dryer, the target temperature range of the outlet air temperature, the first correspondence relationship, and the second correspondence relationship, includes:
obtaining a first target range of the working parameter of the heating element by calculation, according to the target power range and the first correspondence relationship;
obtaining a second target range of the working parameter of the heating element by calculation, according to the target temperature range and the second correspondence relationship; and
using an intersection of the first target range and the second target range as the target range of the working parameter of the heating element.

A second aspect provides a power control device for a hair dryer. The device includes:
a computing unit, configured to determine a target range of a working parameter of a heating element of the hair dryer according to a target power range of the hair dryer; the working parameter including a time characteristic parameter during which the heating element of the hair dryer is turned on in a predetermined period; and
a control unit, configured to control the working parameter of the heating element to be kept within the target range, so that a power of the hair dryer is kept within the target power range.

Optionally, the computing unit is further configured to acquire a first correspondence relationship between a pre-established working parameter and the power of the hair dryer; and obtain the target range of the working parameter by calculation according to the target power range and the first correspondence relationship.

Optionally, the working parameter includes the number of half waves during which the heating element of the hair dryer is turned on in the predetermined period; wherein the predetermined period includes a plurality of the half waves; and correspondingly, the control unit is further configured to:
keep the number of half waves during which the heating element is turned on within the target range in the predetermined period, by controlling on or off of the heating element; wherein one or more spaced half waves exist between part or all of adjacent halves where the heating element is turned on.

Optionally, the computing unit is further configured to acquire a first correspondence relationship between a pre-established working parameter and the power of the hair dryer; acquire a second correspondence relationship between the pre-established working parameter and an outlet air temperature of the hair dryer; and obtain the target range of the working parameter of the heating element by calculation, according to the target power range of the hair dryer, a target temperature range of the outlet air temperature, the first correspondence relationship, and the second correspondence relationship.

Optionally, the first correspondence relationship includes establishing in following manners:
controlling an operation of the hair dryer;
adjusting the working parameter during the operation;
recording a numerical value of the working parameter during an adjustment process, and detecting a power value corresponding to the numerical value of the working parameter; and
obtaining the first correspondence relationship by calculation according to the numerical value of the working parameter and the power value.

Optionally, the second correspondence relationship includes establishing in following manners:
controlling an operation of the hair dryer;
adjusting the working parameter during the operation;
recording a numerical value of the working parameter during an adjustment process, and detecting a temperature value of the outlet air temperature corresponding to the numerical value of the working parameter; and
obtaining the second correspondence relationship by calculation according to the working parameter and the temperature value.

Optionally, obtaining the target range of the working parameter of the heating element by calculation, according to the target power range of the hair dryer, the target temperature range of the outlet air temperature, the first correspondence relationship, and the second correspondence relationship, includes:
obtaining a first target range of the working parameter of the heating element by calculation, according to the target power range and the first correspondence relationship;
obtaining a second target range of the working parameter of the heating element by calculation, according to the target temperature range and the second correspondence relationship; and
using an intersection of the first target range and the second target range as the target range of the working parameter of the heating element.

The beneficial effects of the first aspect and the second aspect of the present application are: by determining the target range of the working parameter of the heating element of the hair dryer according to the target power range of the hair dryer; the working parameter including the time characteristic parameter during which the heating element of the hair dryer is turned on in a predetermined period; and by controlling the working parameter of the heating element to be kept within the target range, so that the power of the hair dryer is kept within the target power range, it can solve the problem that the actual working powers of different hair dryers working in the same gear are different due to the differences among the different hair dryers. By pre-determining the working parameter of the heating element when the hair dryer is operating in the target power range, operating according to the working parameter can ensure that the power of the hair dryer remains within the target power range. In this way, the power ranges of different hair dryers working in the same gear can be made consistent without adjusting the differences among the hair dryers of the same model. Therefore, different hair dryers of the same model can be made to work according to the desired power.

A third aspect provides a method for calibrating a temperature control parameter of a hair dryer. The method includes:
controlling an operation of the hair dryer;
detecting an outlet air temperature of the hair dryer in real time during the operation; and
determining a measured value of a temperature control parameter of the hair dryer as a calibration value of the temperature control parameter, when the outlet air temperature is a target temperature.

Optionally, the method further includes:
storing the calibration value in a target memory, and storing a correspondence relationship between the calibration value and the target temperature.

Optionally, controlling the operation of the hair dryer, includes:
controlling an operating state of the hair dryer so that the outlet air temperature reaches the target temperature.

Optionally, detecting the outlet air temperature of the hair dryer in real time, includes:
detecting a temperature in front of an air outlet of the hair dryer at a specific distance from the air outlet in real time as the outlet air temperature.

Optionally, the target temperature corresponds to a working mode of the hair dryer; correspondingly, the method further includes:
storing the calibration value in a target memory, and storing a correspondence relationship between the calibration value and the working mode.

Optionally, controlling the operating state of the hair dryer so that the outlet air temperature reaches the target temperature, includes:
adjusting the outlet air temperature of the hair dryer by controlling a working state of a heating element and/or a blower of the hair dryer.

Optionally, adjusting the outlet air temperature of the hair dryer by controlling the working state of the heating element and/or the blower of the hair dryer, includes:
adjusting the outlet air temperature by controlling the number of half waves during which the heating element is turned on in a preset control period; wherein the control period includes a plurality of the half waves.

A fourth aspect provides a power control device for a hair dryer. The device includes:
a computing unit, configured to determine a target range of a working parameter of a heating element of the hair dryer according to a target power range of the hair dryer; the working parameter including a time characteristic parameter during which the heating element of the hair dryer is turned on in a predetermined period; and
a control unit, configured to control the working parameter of the heating element to be kept within the target range, so that a power of the hair dryer is kept within the target power range.

Optionally, the computing unit is further configured to acquire a first correspondence relationship between a pre-established working parameter and the power of the hair dryer; and obtain the target range of the working parameter by calculation according to the target power range and the first correspondence relationship.

Optionally, the working parameter includes the number of half waves during which the heating element of the hair dryer is turned on in the predetermined period; wherein the predetermined period includes a plurality of the half waves; and correspondingly, the control unit is further configured to:
keep the number of half waves during which the heating element is turned on within the target range in the predetermined period, by controlling on or off of the heating element; wherein one or more spaced half waves exist between part or all of adjacent halves where the heating element is turned on.

Optionally, the device includes:
a detection unit, configured to detect an outlet air temperature of the hair dryer in real time during an operation of the hair dryer; and
a calibration unit in communication with the hair dryer, the calibration unit being configured to send a control instruction to the hair dryer to control the operation of the hair dryer, and being configured to determine a measured value of a temperature control parameter of the hair dryer as a calibration value of the temperature control parameter, when the outlet air temperature is a target temperature.

Optionally, the detection unit is further configured to:
control an operating state of the hair dryer so that the outlet air temperature reaches the target temperature.

Optionally, the detection unit is further configured to:
detect a temperature in front of an air outlet of the hair dryer at a specific distance from the air outlet in real time as the outlet air temperature.

The beneficial effects of the third aspect and the fourth aspect of the present application are: by controlling an operation of the hair dryer; by detecting an outlet air temperature of the hair dryer in real time during the operation; and by determining a measured value of a temperature control parameter of the hair dryer as a calibration value of the temperature control parameter, when the outlet air temperature is a target temperature; it can solve the problem that the outlet air temperatures of different hair dryers may be different under the same temperature control parameter due to slight differences among the different hair dryers when the temperature control parameters of the hair dryers are uniformly calibrated. Since the temperature control parameters of different hair dryers are calibrated according to the uniform outlet air temperature, the outlet air temperatures of different hair dryers can be kept consistent under the same temperature control parameter without adjusting the differences among the hair dryers of the same model. Therefore, different hair dryers of the same model can all achieve desired working effects.

The above description is only an overview of the technical solutions of the present application. In order to have a clearer understanding of the technical means of the present application and to implement them in accordance with the contents of the specification, the following detailed description is given with reference to the preferred embodiments of the present application and the accompanying drawings.

### BRIEF DESCRIPTION OF DRAWINGS

FIG. 1 is a schematic structural diagram of a power control system for a hair dryer provided by an embodiment of the present application;
FIG. 2 is a flowchart of a power control method for a hair dryer provided by an embodiment of the present application;
FIG. 3 is a block diagram of a power control device for a hair dryer provided by an embodiment of the present application;
FIG. 4 is a block diagram of a power control device for a hair dryer provided by another embodiment of the present application;
FIG. 5 is a schematic structural diagram of a temperature calibration system for a hair dryer provided by an embodiment of the present application;
FIG. 6 is a flowchart of a method for calibrating a temperature of a hair dryer provided by an embodiment of the present application;
FIG. 7 is a block diagram of a temperature calibration device for a hair dryer provided by an embodiment of the present application; and
FIG. 8 is a block diagram of a device for calibrating a temperature of a hair dryer provided by another embodiment of the present application.

### DETAILED DESCRIPTION

The specific implementations of the present application will be described in further detail below with reference to the accompanying drawings and embodiments. The following embodiments are used to illustrate the present application, but are not intended to limit the scope of the present application.

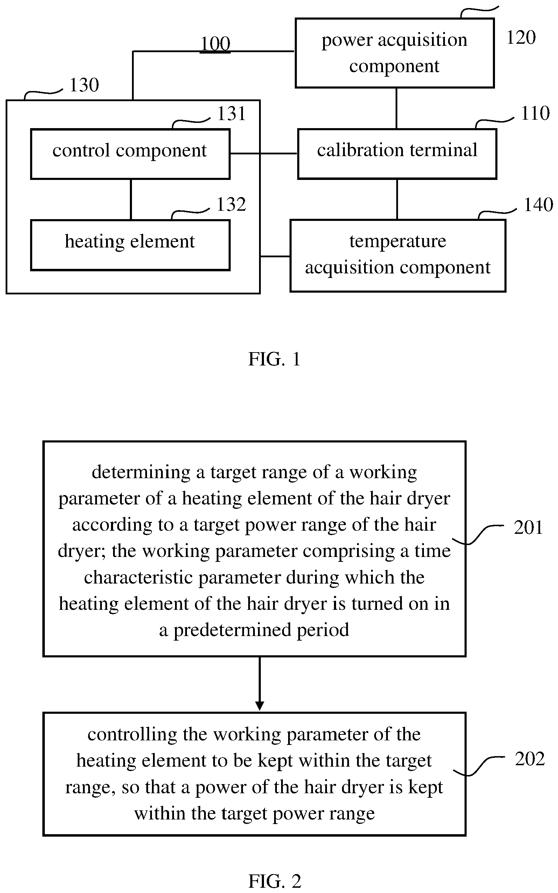

FIG. 1 is a power control system 100 for a blower provided by an embodiment of the present application. As shown in FIG. 1, the system at least includes: a calibration terminal 110, a power acquisition component 120 and a hair dryer 130.

The power acquisition component 120 is used to acquire power parameters of the hair dryer 130. Wherein, the power parameters include the whole machine power of the hair dryer 130. In other words, the power parameters include the sum of the powers of each component in the hair dryer 130 when working.

Optionally, the power acquisition component 120 may be a power sensor or a power meter, etc. This embodiment does not limit the device type of the power acquisition component 120.

Optionally, the power acquisition component 120 may be part of the calibration terminal 110; or, the power acquisition component 120 is an independent device from the calibration terminal 110.

The hair dryer 130 includes a control component 131 and a heating element 132. The control component 131 is in communication with the heating element 132.

The control component 131 is used to control the hair dryer 130, such as: controlling the start and stop of the hair dryer 130, the heating temperature of the heating element 132, the turning on and off of the heating element 132, and so on. In one example, the control component 131 is a printed circuit board (PCB) of the hair dryer 130.

The heating element 132 is used to heat the air flowing through the hair dryer 130. Optionally, the heating element 132 may be a heating wire. The number of heating wires may be one or more, and the implementation manner of the heating element 132 is not limited in this embodiment.

The calibration terminal 110 is used for power calibration of the hair dryer 130. Optionally, the calibration terminal 110 may be a computer, a mobile phone, a tablet computer, or a notebook computer, etc. This embodiment does not limit the device type of the calibration terminal 110.

When performing power calibration, the calibration terminal 110 is connected in communication with the power acquisition component 120 and the control component 131, respectively. By controlling the control component 131 in the hair dryer 130, the heating element 132 can be controlled to work.

The power calibration process of the calibration terminal 110 includes: obtaining a power acquired by the power acquisition component 120 and a working parameter of the heating element 132 when the hair dryer 130 is working; and establishing a first correspondence relationship between the power and the working parameter. After that, the calibration terminal 110 stores the first correspondence relationship to the hair dryer 130.

Wherein, the working parameter includes a time characteristic parameter when the heating element 131 of the hair dryer 130 is turned on in a predetermined period. In other words, the working parameter is used to indicate at which time the heating element 131 is turned on and at which time it is turned off within the predetermined period.

In one example, the time characteristic parameter is the number of half waves at which the heating element 131 is turned on. Wherein, the predetermined period includes a plurality of half waves. A half wave refers to a half waveform in a sinusoidal voltage signal that powers the heating element 131. A voltage at a start position of the half waveform is 0V and a voltage at an end position is 0V.

The power of the hair dryer 130 when working includes a target power range. In this way, the first correspondence relationship includes a correspondence relationship between the target power range and the target range of the working parameter.

The target power range is stored in the calibration terminal 110 in advance. Optionally, when the hair dryer 130 includes at least two gears, the target power ranges corresponding to different gears are different.

For example, the target power range corresponding to a first gear is [P1, P1'], the target power range corresponding to a second gear is [P2, P2'], and the target power range corresponding to a third gear is [P3, P3'].

Optionally, the target power range is determined based on a rated power corresponding to each gear. For example, if the rated power is 100W, a corresponding target power range can be [90W, 110W].

Optionally, the power control system 100 for the hair dryer further includes a temperature acquisition component 140. The temperature acquisition component 140 is used to acquire an output air temperature of the hair dryer 130. Optionally, the temperature acquisition component 140 may be a temperature measuring element such as a thermocouple or a thermistor, and the implementation manner of the temperature acquisition component 140 is not limited in this embodiment. The temperature acquisition component 140 is connected in communication with the calibration terminal 110.

At this time, the process of power calibration performed by the calibration terminal 110 further includes: acquiring a corresponding outlet air temperature when the hair dryer 130 works according to the working parameter of the heating element 132; and establishing a second correspondence relationship between the working parameter and the outlet air temperature. After that, the calibration terminal 110 stores the second correspondence relationship to the hair dryer 130.

Wherein, the outlet air temperature when the hair dryer works includes a target temperature range. In this way, the second correspondence relationship includes a correspondence relationship between the target temperature range and the target range of the working parameter.

The target temperature range is stored in the calibration terminal 110 in advance. Optionally, when the hair dryer 130 includes at least two gears, the target temperature ranges corresponding to different gears are different.

For example: the target power range corresponding to a first gear is [T1, T1']; the target power range corresponding to a second gear is [T2, T2']; and the target power range corresponding to a third gear is [T3, T3'].

Optionally, in the present application, the hair dryer 130 is used to: determine a target range of a working parameter of a heating element of the hair dryer according to a target power range of the hair dryer 130; the working parameter including a time characteristic parameter during which the heating element of the hair dryer is turned on in a predetermined period; and control the working parameter of the heating element to be kept within the target range, so that a power of the hair dryer is kept within the target power range.

In one example, determining the target range of the working parameter of the heating element of the hair dryer according to the target power range of the hair dryer, includes: acquiring a first correspondence relationship between a pre-established working parameter and the power of the hair dryer; and obtaining the target range of the working parameter by calculation according to the target power range and the first correspondence relationship.

In another example, determining the target range of the working parameter of the heating element corresponding to the target power range, includes: acquiring a first correspondence relationship between a pre-established working parameter and the power of the hair dryer; acquiring a second correspondence relationship between the pre-established working parameter and an outlet air temperature of the hair dryer; and obtaining the target range of the working parameter of the heating element by calculation, according to the target power range of the hair dryer, a target temperature range of the outlet air temperature, the first correspondence relationship, and the second correspondence relationship.

In this embodiment, by pre-determining the working parameter of the heating element when the hair dryer is operating in the target power range, operating according to the working parameter can ensure that the power of the hair dryer remains within the target power range. In this way, the power ranges of different hair dryers working in the same gear can be made consistent without adjusting the differences among the hair dryers of the same model. Therefore, different hair dryers of the same model can be made to work according to the desired power.

FIG. 2 is a power control method of a hair dryer provided by an embodiment of the present application. This embodiment is described by taking the method applied to the power control system 100 of the hair dryer shown in FIG. 1 as an example. The method includes at least the following steps:

Step 201, determining a target range of a working parameter of a heating element of the hair dryer according to a target power range of the hair dryer; the working parameter including a time characteristic parameter during which the heating element of the hair dryer is turned on in a predetermined period.

Optionally, the target power range is determined based on the rated power of the hair dryer. When the hair dryer includes at least two gears, the target power ranges corresponding to different gears are different.

In one example, the hair dryer determines the target range of the working parameter of the heating element of the hair dryer according to the target power range of the hair dryer, includes: acquiring a first correspondence relationship between a pre-established working parameter and the power of the hair dryer; and obtaining the target range of the working parameter by calculation according to the target power range and the first correspondence relationship.

The first correspondence relationship in the hair dryer is established in the following manners: controlling an operation of the hair dryer; adjusting the working parameter during the operation; recording a numerical value of the working parameter during an adjustment process, and detecting a power value corresponding to the numerical value of the working parameter; and obtaining the first correspondence relationship by calculation according to the numerical value of the working parameter and the power value.

In another example, determining the target range of the working parameter of the heating element corresponding to the target power range, includes: acquiring a first correspondence relationship between a pre-established working parameter and the power of the hair dryer; acquiring a second correspondence relationship between the pre-established working parameter and an outlet air temperature of the hair dryer; and obtaining the target range of the working parameter of the heating element by calculation, according to the target power range of the hair dryer, a target temperature range of the outlet air temperature, the first correspondence relationship, and the second correspondence relationship.

The second correspondence relationship in the hair dryer is established in the following manners: controlling an operation of the hair dryer; adjusting the working parameter during the operation; recording a numerical value of the working parameter during an adjustment process, and detecting a temperature value of the outlet air temperature corresponding to the numerical value of the working parameter; and obtaining the second correspondence relationship by calculation according to the working parameter and the temperature value.

At this time, obtaining the target range of the working parameter of the heating element by calculation, according to the target power range of the hair dryer, the target temperature range of the outlet air temperature, the first correspondence relationship, and the second correspondence relationship, includes: obtaining a first target range of the working parameter of the heating element by calculation, according to the target power range and the first correspondence relationship; obtaining a second target range of the working parameter of the heating element by calculation, according to the target temperature range and the second correspondence relationship; and using an intersection of the first target range and the second target range as the target range of the working parameter of the heating element.

Step 202, controlling the working parameter of the heating element to be kept within the target range, so that a power of the hair dryer is kept within the target power range.

Optionally, the working parameter includes the number of half waves during which the heating element of the hair dryer is turned on in the predetermined period; wherein the predetermined period includes a plurality of the half waves; and correspondingly, controlling the working parameter of the heating element to be kept within the target range, includes: by controlling on or off of the heating element, keeping the number of half waves during which the heating element is turned on within the target range in the predetermined period; wherein one or more spaced half waves exist between part or all of adjacent halves where the heating element is turned on.

The half wave refers to a half waveform in a sinusoidal voltage signal that powers the heating element. A voltage at a start position of the half waveform is 0V and a voltage at an end position is 0V.

In summary, by determining the target range of the working parameter of the heating element of the hair dryer according to the target power range of the hair dryer; the working parameter including the time characteristic parameter during which the heating element of the hair dryer is turned on in a predetermined period; and by controlling the working parameter of the heating element to be kept within the target range, so that the power of the hair dryer is kept within the target power range, it can solve the problem that the actual working powers of different hair dryers working in the same gear are different due to the differences among the different hair dryers. By pre-determining the working parameter of the heating element when the hair dryer is operating in the target power range, operating according to the working parameter can ensure that the power of the hair dryer remains within the target power range. In this way, the power ranges of different hair dryers working in the same gear can be made consistent without adjusting the differences among the hair dryers of the same model. Therefore, different hair dryers of the same model can be made to work according to the desired power.

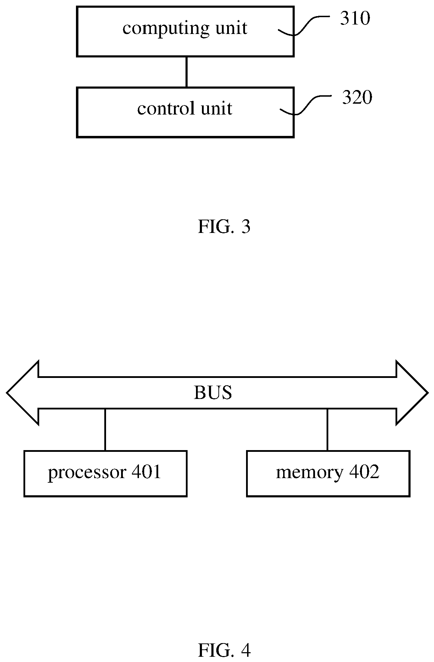

FIG. 3 is a block diagram of a power control device for a hair dryer provided by an embodiment of the present application. The device at least includes the following modules: a computing unit 310 and a control unit 320.

The computing unit 310 is configured to determine a target range of a working parameter of a heating element of the hair dryer according to a target power range of the hair dryer. The working parameter includes a time characteristic parameter during which the heating element of the hair dryer is turned on in a predetermined period.

The control unit 320 is configured to control the working parameter of the heating element to be kept within the target range, so that a power of the hair dryer is kept within the target power range.

Optionally, the computing unit is further configured to acquire a first correspondence relationship between a pre-established working parameter and the power of the hair dryer; and obtain the target range of the working parameter by calculation according to the target power range and the first correspondence relationship.

Optionally, the working parameter includes the number of half waves during which the heating element of the hair dryer is turned on in the predetermined period; wherein the predetermined period includes a plurality of the half waves; and correspondingly, the control unit is further configured to:
keep the number of half waves during which the heating element is turned on within the target range in the predetermined period, by controlling on or off of the heating element; wherein one or more spaced half waves exist between part or all of adjacent halves where the heating element is turned on.

Optionally, the computing unit is further configured to acquire a first correspondence relationship between a pre-established working parameter and the power of the hair dryer; acquire a second correspondence relationship between the pre-established working parameter and an outlet air temperature of the hair dryer; and obtain the target range of the working parameter of the heating element by calculation, according to the target power range of the hair dryer, a target temperature range of the outlet air temperature, the first correspondence relationship, and the second correspondence relationship.

Optionally, the first correspondence relationship includes establishing in following manners:
controlling an operation of the hair dryer;
adjusting the working parameter during the operation;
recording a numerical value of the working parameter during an adjustment process, and detecting a power value corresponding to the numerical value of the working parameter; and
obtaining the first correspondence relationship by calculation according to the numerical value of the working parameter and the power value.

Optionally, the second correspondence relationship includes establishing in following manners:
controlling an operation of the hair dryer;
adjusting the working parameter during the operation;
recording a numerical value of the working parameter during an adjustment process, and detecting a temperature value of the outlet air temperature corresponding to the numerical value of the working parameter; and
obtaining the second correspondence relationship by calculation according to the working parameter and the temperature value.

Optionally, obtaining the target range of the working parameter of the heating element by calculation, according to the target power range of the hair dryer, the target temperature range of the outlet air temperature, the first correspondence relationship, and the second correspondence relationship, includes:
obtaining a first target range of the working parameter of the heating element by calculation, according to the target power range and the first correspondence relationship;
obtaining a second target range of the working parameter of the heating element by calculation, according to the target temperature range and the second correspondence relationship; and
using an intersection of the first target range and the second target range as the target range of the working parameter of the heating element.

For relevant details, refer to the above method embodiments.

It should be noted that: when the power control device of the hair dryer provided in the above embodiment performs the power control of the hair dryer, only the division of the above functional modules is used as an example for illustration. In practical applications, the above-mentioned functions can be assigned to different function modules as required. That is, the internal structure of the power control device of the hair dryer is divided into different functional modules to complete all or part of the functions described above. In addition, the power control device for the hair dryer provided in the above embodiment and the embodiment of the power control method for the hair dryer belong to the same concept, and the specific implementation process is detailed in the method embodiment, which will not be repeated here.

FIG. 4 is a block diagram of a power control device of a hair dryer provided by an embodiment of the present application. The device includes at least a processor 401 and a memory 402.

The processor 401 may include one or more processing cores, such as a 4-core processor, an 8-core processor, and the like. The processor 401 may be implemented in at least one hardware form among DSP (Digital Signal Processing), FPGA (Field-Programmable Gate Array), and PLA (Programmable Logic Array).

The memory 402 may include one or more computer-readable storage medium. The computer-readable storage medium may be non-transitory. The memory 402 may also include high-speed random access memory, as well as non-volatile memory, such as one or more disk storage devices, flash storage devices. In some embodiments, a non-transitory computer-readable storage medium in the memory 402 is used to store at least one instruction. The at least one instruction is loaded and executed by the processor 401 to implement the power control method of the hair dryer provided by the method embodiments of the present application.

In some embodiments, the power control device of the hair dryer may also optionally include: a peripheral device port and at least one peripheral device. The processor 401, the memory 402 and the peripheral device port can be connected through a BUS or a signal line. Each peripheral device can be connected to the peripheral device port through the BUS, the signal line or a circuit board. Illustratively, the peripheral devices include, but are not limited to, radio frequency circuits, touch screens, audio circuits, probes and power supplies etc.

Certainly, the power control device of the hair dryer may further include fewer or more components, which is not limited in this embodiment.

Optionally, the present application further provides a computer-readable storage medium in which a program is stored. The program is loaded and executed by the processor to implement the power control method of the hair dryer of the above method embodiments.

Optionally, the present application also provides a computer product. The computer product includes a computer-readable storage medium in which a program is stored. The program is loaded and executed by the processor to implement the power control method of the hair dryer of the above method embodiments.

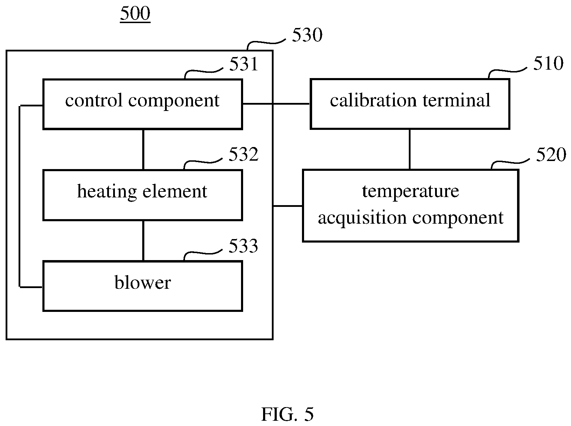

The present application also provides a method for calibrating a temperature control parameter of a hair dryer. Specifically, FIG. 5 is a temperature calibration system 500 for the hair dryer provided by an embodiment of the present application. As shown in FIG. 5, the system at least includes: a calibration terminal 510, a temperature acquisition component 520 and a blower 530.

In the present application, the temperature acquisition component 520 is used to acquire an outlet air temperature of the hair dryer 530 and send the outlet air temperature to the calibration terminal 510. Optionally, the temperature acquisition component 520 may be a temperature measuring element such as a thermocouple or a thermistor, and the implementation manner of the temperature acquisition component 520 is not limited in this embodiment.

Optionally, the temperature acquisition component 520 may be part of the calibration terminal 510; or, the temperature acquisition component 520 is an independent device from the calibration terminal 510.

The hair dryer 530 includes a control component 531, a heating element 532 and a blower 533. The control component 531 is connected in communication with the heating element 532 and the blower 533, respectively, and controls the operation of the heating element 532 and the blower 533 through the communication connection. In one example, the control component 531 may be a printed circuit board (PCB) of the hair dryer 530.

The blower 533 is used to generate an airflow in the hair dryer 530. A flow direction of the airflow is to enter from an air inlet of the hair dryer 530 and discharge from an air outlet of the hair dryer 530.

The calibration terminal 510 is used to perform temperature calibration on the temperature control parameter in the hair dryer 530. Optionally, the calibration terminal 510 may be a computer, a mobile phone, a tablet computer, a notebook computer, or the like, and the device type of the calibration terminal 510 is not limited in this embodiment.

When performing temperature calibration, the calibration terminal 510 is connected in communication with the temperature acquisition component 520 and the control component 531, respectively; and the calibration terminal 510 controls the heating element 532 and/or the blower 533 to work by controlling the control component 531 in the hair dryer 530.

The process of the temperature calibration performed by the calibration terminal 510 includes: controlling an operation of the hair dryer 530; detecting an outlet air temperature of the hair dryer 503 in real time during the operation; and determining a measured value of a temperature control parameter of the hair dryer 530 as a calibration value of the temperature control parameter, when the outlet air temperature is a target temperature.

Optionally, the target temperature is pre-stored in the calibration terminal 510, and the value of the target temperature is uniformly calibrated for the hair dryers 530 of the same model.

Optionally, when the hair dryer 530 includes at least two gears, the target temperatures corresponding to different gears are different. For example, the target temperature corresponding to a first gear is T1; the target temperature corresponding to a second gear is T2; and the target temperature corresponding to a third gear is T3.

Optionally, the temperature control parameter includes a heating temperature of the heating element 532 and/or a rotation speed of the blower 533; or, the temperature control parameter includes the number of half waves during which the heating element 532 is turned on in the control period and/or the rotation speed of the blower 533. This embodiment does not limit the specific content of the temperature control parameter.

The system for calibrating the temperature control parameter for the hair dryer 530 provided in this embodiment can keep the outlet air temperature of different hair dryers 530 working in the same gear consistent without adjusting the differences among the hair dryers 530 of the same model. Therefore, the different hair dryers 530 of the same model can all achieve desired working effects.

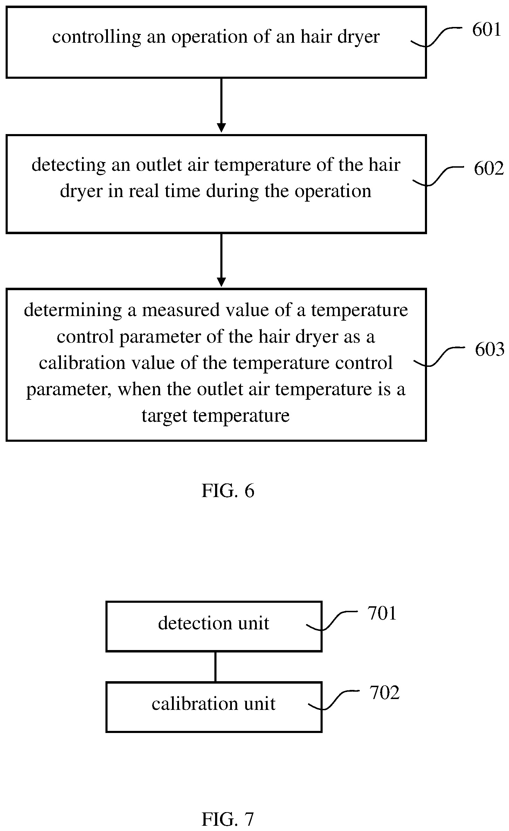

FIG. 6 is a flowchart of a method for calibrating a temperature control parameter of a hair dryer provided by an embodiment of the present application. This embodiment is described by taking as an example that the method is applied to the temperature calibration system 500 of the hair dryer shown in FIG. 5, and the execution subject of each step is the calibration terminal 510 in the system. The method includes at least the following steps:

Step 601, controlling an operation of the hair dryer.

An operating state of the hair dryer is controlled so that an outlet air temperature reaches a target temperature.

The calibration terminal adjusts the outlet air temperature of the hair dryer by controlling a working state of a heating element and/or a blower of the hair dryer.

In one example, adjusting the outlet air temperature of the hair dryer by controlling the working state of the heating element and/or the blower of the hair dryer, includes: adjusting the outlet air temperature by controlling the number of half waves during which the heating element is turned on in a preset control period; wherein the control period includes a plurality of the half waves; and/or adjusting the outlet air temperature by controlling the rotation speed of the blower.

The half wave refers to a half waveform in a sinusoidal voltage signal that powers the heating element. A voltage at a start position of the half waveform is 0V and a voltage at an end position is 0V.

In one example, controlling the working state of the heating element and/or the blower of the hair dryer, includes: sending an initial control signal to a control component in the hair dryer, the initial control signal being used to trigger the control component to control the hair dryer to work according to an initial temperature control parameters; obtaining the current outlet air temperature corresponding to the initial control signal acquired by the temperature acquisition component; when the current outlet air temperature is inconsistent with the target temperature, adjusting the current temperature control parameter to obtain the current outlet air temperature corresponding to the parameter adjustment; when the current outlet air temperature is inconsistent with the target temperature, performing the step of adjusting the current temperature control parameter again to obtain the current outlet air temperature corresponding to the parameter adjustment; when the current outlet air temperature is consistent with the target temperature, determining that the outlet air temperature reaches the target temperature.

In this embodiment, the temperature control parameter (including the initial temperature control parameter) includes the number of half waves and/or the rotation speed of the blower, during which the heating element is turned on in the control period.

Optionally, the initial temperature control parameter and the target temperature are pre-stored in the calibration terminal. The initial temperature control parameter is the temperature control parameter originally calibrated in the hair dryer. The target temperature is the desired outlet air temperature of the hair dryer in the current working state. In one example, the working state of the hair dryer includes at least two gears. Different gears correspond to different target temperatures. The initial temperature control parameters corresponding to different gears are different. For example, the target temperature corresponding to a first gear is T1, and the corresponding initial heating temperature is A; the target temperature corresponding to a second gear is T2, and the corresponding initial heating temperature is B; the target temperature corresponding to a third gear is T3, and the corresponding initial heating temperature is C.

Step 602, during the operating process, detecting the outlet air temperature of the hair dryer in real time.

Detecting the outlet air temperature of the hair dryer in real time includes: detecting a temperature in front of an air outlet of the hair dryer at a specific distance from the air outlet in real time as the outlet air temperature.

The temperature acquisition component connected in communication with the calibration terminal acquires the outlet air temperature in front of the air outlet of the hair dryer in real time, and sends the outlet air temperature to the calibration terminal. Correspondingly, the calibration terminal receives the outlet air temperature acquired in real time.

Step 603, when the outlet air temperature is the target temperature, determining a measured value of the temperature control parameter of the hair dryer as a calibration value of the temperature control parameter.

After the step 603, the calibration value is stored in the target memory, and a correspondence relationship between the calibration value and the target temperature is stored.

Optionally, the hair dryer includes multiple working modes, for example, including a first working mode corresponding to a first gear and a second working mode corresponding to a second gear. At this time, the target temperature corresponds to the working mode of the hair dryer. After the step 603, the method further includes: storing the calibration value in the target memory, and storing the correspondence relationship between the calibration value and the working mode.

In summary, by controlling an operation of the hair dryer; by detecting an outlet air temperature of the hair dryer in real time during the operation; and by determining a measured value of a temperature control parameter of the hair dryer as a calibration value of the temperature control parameter, when the outlet air temperature is a target temperature; the method for calibrating the temperature control parameter of the hair dryer provided in this embodiment can solve the problem that the outlet air temperatures of different hair dryers may be different under the same temperature control parameter due to slight differences among the different hair dryers when the temperature control parameters of the hair dryers are uniformly calibrated. Since the temperature control parameters of different hair dryers are calibrated according to the uniform outlet air temperature, the outlet air temperatures of different hair dryers can be kept consistent under the same temperature control parameter without adjusting the differences among the hair dryers of the same model. Therefore, different hair dryers of the same model can all achieve desired working effects.

FIG. 7 is a block diagram of a device for calibrating a temperature control parameter of a hair dryer provided by an embodiment of the present application. This embodiment is described by taking the device applied to the system for calibrating the temperature control parameter of the hair dryer shown in FIG. 5 as an example. The device at least includes the following modules: a detection unit 710 and a calibration unit 720.

The detection unit 710 is configured to detect an outlet air temperature of the hair dryer in real time during an operation of the hair dryer.

The calibration unit 720 is in communication with the hair dryer. The calibration unit is configured to send a control instruction to the hair dryer to control the operation of the hair dryer, and is configured to determine a measured value of a temperature control parameter of the hair dryer as a calibration value of the temperature control parameter, when the outlet air temperature is a target temperature.

Optionally, the detection unit 710 is further configured to: control an operating state of the hair dryer so that the outlet air temperature reaches the target temperature.

Optionally, the detection unit 710 is further configured to: detect a temperature in front of an air outlet of the hair dryer at a specific distance from the air outlet in real time as the outlet air temperature.

Optionally, the detection unit 710 is further configured to: store the calibration value in a target memory, and store a correspondence relationship between the calibration value and the target temperature.

Optionally, the target temperature corresponds to a working mode of the hair dryer. Correspondingly, the detection unit 710 is further configured to: store the calibration value in a target memory, and store a correspondence relationship between the calibration value and the working mode.

Optionally, the detection unit 710 is further configured to: adjust the outlet air temperature of the hair dryer by controlling a working state of a heating element and/or a blower of the hair dryer.

Optionally, the detection unit 710 is further configured to: adjust the outlet air temperature by controlling the number of half waves during which the heating element is turned on in a preset control period; wherein the control period includes a plurality of the half waves.

For relevant details, refer to the above method embodiments.

It should be noted that: when the device for calibrating a temperature control parameter of the hair dryer provided in the above embodiment performs the temperature control parameter calibration of the hair dryer, only the division of the above functional modules is used as an example for illustration. In practical applications, the above-mentioned functions can be assigned to different function modules as required. That is, the internal structure of the device for calibrating a temperature control parameter of the hair dryer is divided into different functional modules, so as to complete all or part of the functions described above. In addition, the device for calibrating the temperature control parameter of the hair dryer provided by the above embodiment and the embodiment of the method for calibrating the temperature control parameter of the hair dryer belong to the same concept.

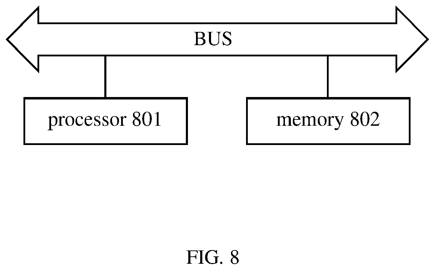

FIG. 8 is a block diagram of a device for calibrating a temperature control parameter of a hair dryer provided by an embodiment of the present application. The device includes at least a processor 801 and a memory 802.

The processor 801 may include one or more processing cores, such as a 4-core processor, an 8-core processor, and the like. The processor 801 may be implemented in at least one hardware form among DSP (Digital Signal Processing), FPGA (Field-Programmable Gate Array), and PLA (Programmable Logic Array). The processor 801 may also include a main processor and a co-processor. The main processor is a processor for processing data in a wake-up state, and is also called a CPU (Central Processing Unit). The co-processor is a low-power processor for processing data in a standby state.

The memory 802 may include one or more computer-readable storage medium. The computer-readable storage medium may be non-transitory. The memory 802 may also include high-speed random access memory, as well as non-volatile memory, such as one or more disk storage devices, flash storage devices. In some embodiments, a non-transitory computer-readable storage medium in the memory 802 is used to store at least one instruction. The at least one instruction is loaded and executed by the processor 801 to implement the method for calibrating the temperature control parameter of the hair dryer provided in the method embodiment of the present application.

In some embodiments, the device for calibrating the temperature control parameter of the hair dryer may also optionally include: a peripheral device port and at least one peripheral device. The processor 801, the memory 802 and the peripheral device port can be connected through a BUS or a signal line. Each peripheral device can be connected to the peripheral device port through the BUS, the signal line or a circuit board. Illustratively, the peripheral devices include, but are not limited to, radio frequency circuits, touch screens, audio circuits, probes and power supplies etc.

Certainly, the device for calibrating the temperature control parameter of the hair dryer may also include fewer or more components, which is not limited in this embodiment.

Optionally, the present application further provides a computer-readable storage medium in which a program is stored. The program is loaded and executed by the processor to implement the method for calibrating the temperature control parameter of the hair dryer according to the above method embodiments.

Optionally, the present application also provides a computer product. The computer product includes a computer-readable storage medium in which a program is stored. The program is loaded and executed by the processor to implement the method for calibrating the temperature control parameter of the hair dryer according to the above method embodiments.

The technical features of the above-described embodiments can be combined arbitrarily. In order to simplify the description, all possible combinations of the technical features in the above embodiments are not described. However, as long as there is no contradiction in the combination of these technical features, they should be considered to be within the scope of the description in this specification.

The above-mentioned embodiments only represent several embodiments of the present application, and the descriptions thereof are specific and detailed, but should not be construed as a limitation on the scope of the invention patent. It should be pointed out that for those skilled in the art, without departing from the concept of the present application, several modifications and improvements can be made, which all belong to the protection scope of the present application. Therefore, the scope of protection of the present application shall be subject to the appended claims.

## Claims

1. A power control method for a hair dryer, comprising:
determining a target range of a working parameter of a heating element of the hair dryer according to a target power range of the hair dryer; the working parameter comprising a time characteristic parameter during which the heating element of the hair dryer is turned on in a predetermined period; and
controlling the working parameter of the heating element to be kept within the target range, so that a power of the hair dryer is kept within the target power range.

2. The method according to claim 1, wherein determining the target range of the working parameter of the heating element of the hair dryer according to the target power range of the hair dryer, comprises:
acquiring a first correspondence relationship between a pre-established working parameter and the power of the hair dryer; and
obtaining the target range of the working parameter by calculation according to the target power range and the first correspondence relationship.

3. The method according to claim 1, wherein the working parameter comprises the number of half waves during which the heating element of the hair dryer is turned on in the predetermined period; wherein the predetermined period comprises a plurality of the half waves; and correspondingly, controlling the working parameter of the heating element to be kept within the target range, comprises:
by controlling on or off of the heating element, keeping the number of half waves during which the heating element is turned on within the target range in the predetermined period;
wherein one or more spaced half waves exist between part or all of adjacent halves where the heating element is turned on.

4. The method according to claim 1, wherein determining the target range of the working parameter of the heating element corresponding to the target power range, comprises:
acquiring a first correspondence relationship between a pre-established working parameter and the power of the hair dryer;
acquiring a second correspondence relationship between the pre-established working parameter and an outlet air temperature of the hair dryer; and
obtaining the target range of the working parameter of the heating element by calculation, according to the target power range of the hair dryer, a target temperature range of the outlet air temperature, the first correspondence relationship, and the second correspondence relationship.

5. The method according to claim 2 or 4, wherein the first correspondence relationship comprises establishing in following manners:
controlling an operation of the hair dryer;
adjusting the working parameter during the operation;
recording a numerical value of the working parameter during an adjustment process, and detecting a power value corresponding to the numerical value of the working parameter; and
obtaining the first correspondence relationship by calculation according to the numerical value of the working parameter and the power value.

6. The method according to claim 4, wherein the second correspondence relationship comprises establishing in following manners:
controlling an operation of the hair dryer;
adjusting the working parameter during the operation;
recording a numerical value of the working parameter during an adjustment process, and detecting a temperature value of the outlet air temperature corresponding to the numerical value of the working parameter; and
obtaining the second correspondence relationship by calculation according to the working parameter and the temperature value.

7. The method according to claim 4, wherein obtaining the target range of the working parameter of the heating element by calculation, according to the target power range of the hair dryer, the target temperature range of the outlet air temperature, the first correspondence relationship, and the second correspondence relationship, comprises:
obtaining a first target range of the working parameter of the heating element by calculation, according to the target power range and the first correspondence relationship;
obtaining a second target range of the working parameter of the heating element by calculation, according to the target temperature range and the second correspondence relationship; and
using an intersection of the first target range and the second target range as the target range of the working parameter of the heating element.

8. A method for calibrating a temperature control parameter of a hair dryer, comprising:
controlling an operation of the hair dryer;
detecting an outlet air temperature of the hair dryer in real time during the operation; and
determining a measured value of a temperature control parameter of the hair dryer as a calibration value of the temperature control parameter, when the outlet air temperature is a target temperature.

9. The method according to claim 8, further comprising:
storing the calibration value in a target memory, and storing a correspondence relationship between the calibration value and the target temperature.

10. The method according to claim 8, wherein controlling the operation of the hair dryer, comprises:
controlling an operating state of the hair dryer so that the outlet air temperature reaches the target temperature.

11. The method according to claim 8, wherein detecting the outlet air temperature of the hair dryer in real time, comprises:
detecting a temperature in front of an air outlet of the hair dryer at a specific distance from the air outlet in real time as the outlet air temperature.

12. The method according to claim 8, wherein the target temperature corresponds to a working mode of the hair dryer; correspondingly, the method further comprises:
storing the calibration value in a target memory, and storing a correspondence relationship between the calibration value and the working mode.

13. The method according to claim 10, wherein controlling the operating state of the hair dryer so that the outlet air temperature reaches the target temperature, comprises:
adjusting the outlet air temperature of the hair dryer by controlling a working state of a heating element and/or a blower of the hair dryer.

14. The method according to claim 13, wherein adjusting the outlet air temperature of the hair dryer by controlling the working state of the heating element and/or the blower of the hair dryer, comprises:
adjusting the outlet air temperature by controlling the number of half waves during which the heating element is turned on in a preset control period; wherein the control period comprises a plurality of the half waves.

15. A power control device for a hair dryer, comprising:
a computing unit, configured to determine a target range of a working parameter of a heating element of the hair dryer according to a target power range of the hair dryer; the working parameter comprising a time characteristic parameter during which the heating element of the hair dryer is turned on in a predetermined period; and
a control unit, configured to control the working parameter of the heating element to be kept within the target range, so that a power of the hair dryer is kept within the target power range.

16. The device according to claim 15, wherein the computing unit is further configured to acquire a first correspondence relationship between a pre-established working parameter and the power of the hair dryer; and obtain the target range of the working parameter by calculation according to the target power range and the first correspondence relationship.

17. The device according to claim 15, wherein the working parameter comprises the number of half waves during which the heating element of the hair dryer is turned on in the predetermined period; wherein the predetermined period comprises a plurality of the half waves; and correspondingly, the control unit is further configured to:
keep the number of half waves during which the heating element is turned on within the target range in the predetermined period, by controlling on or off of the heating element;
wherein one or more spaced half waves exist between part or all of adjacent halves where the heating element is turned on.

18. A device for calibrating a temperature control parameter of a hair dryer, comprising:
a detection unit, configured to detect an outlet air temperature of the hair dryer in real time during an operation of the hair dryer; and
a calibration unit in communication with the hair dryer, the calibration unit being configured to send a control instruction to the hair dryer to control the operation of the hair dryer, and being configured to determine a measured value of a temperature control parameter of the hair dryer as a calibration value of the temperature control parameter, when the outlet air temperature is a target temperature.

19. The device according to claim 18, wherein the detection unit is further configured to:
control an operating state of the hair dryer so that the outlet air temperature reaches the target temperature.

20. The device according to claim 18, wherein the detection unit is further configured to:
detect a temperature in front of an air outlet of the hair dryer at a specific distance from the air outlet in real time as the outlet air temperature.
